# EUROPEAN PATENT APPLICATION

(11) **EP 3 075 518 A1**
(43) Date of publication of application: **05.10.2016**
(21) Application number: 16161541.4
(22) Date of filing: 22.03.2016
(51) Int. Cl.: B29C 65/52, B29C 65/78, A41H 43/04, D06H 5/00

(54) **BONDING DEVICE**

(30) Priority: 31.03.2015 JP 2015070784
(71) Applicant: Brother Kogyo Kabushiki Kaisha, Nagoya-shi, Aichi 467-8561 (JP)
(72) Inventor: IWAKOSHI, Hiroyasu, Nagoya, Aichi 467-8562 (JP); UMEDA, Kazutoshi, Nagoya, Aichi 467-8562 (JP); MURAKAMI, Kenji, Nagoya, Aichi 467-8562 (JP); SHIBATA, Itaru, Nagoya, Aichi 467-8562 (JP); MINAGAWA, Yuichiro, Nagoya, Aichi 467-8562 (JP)
(74) Representative: Prüfer & Partner mbB Patentanwälte · Rechtsanwälte

(57) **Abstract**

The bonding device (1) includes an upper feed arm (6), an upper roller, a lower roller (18), a discharge outlet (65), and a tape guide (90). The upper feed arm (6) rotatably supports the upper roller (12). The upper roller is disposed above a cloth (C1) and a tape (C2), at a position at which the tape overlays the cloth. The lower roller (18) faces the upper roller. The discharge outlet (65) faces an outer circumferential face of the upper roller and discharges an adhesive onto the tape. The upper roller and the lower roller feed the tape and the cloth. The tape guide (90) is fixed to a left side face (6A) of the upper feed arm and faces the outer circumferential face of the upper roller, and guides the tape to the outer circumferential face of the upper roller.

## Description

### BACKGROUND

The present invention relates to a bonding device.

A cloth bonding device that is described in Japanese Laid-Open Patent Publication No. 2010-222140 applies a heated and liquefied adhesive to a cloth that is below a nozzle, overlays another cloth from above, and then bonds the two cloths by pressing them between a pair of rollers.

### SUMMARY

Sometimes, the cloth that is placed from above has a narrower width than that of the lower cloth, for example. At this time, there is a case in which it is difficult for a user to visually recognize a location to which the adhesive is applied to the lower cloth and a pressure bonding position, as there is the cloth above. When the bonding location of the cloth curves into an arc shape, the user performs operations while adjusting positions of the lower cloth and the upper cloth, but it is difficult to verify whether or not the location to which the adhesive is applied is aligned with a left-right position of the upper cloth. As a result, displacement in a width direction of the rollers may occur between the upper cloth and the lower cloth, resulting in a bonding quality defect.

It is an object of the present invention to provide a bonding device capable of suppressing bonding defects.

A bonding device according to an aspect of the present invention includes a nozzle and a feed mechanism. The nozzle is adapted to discharge an adhesive. The feed mechanism is adapted to overlay a bonding face of a first sheet onto a top face of a second sheet and is adapted to feed the first sheet and the second sheet. The adhesive discharged from the nozzle is interposed between the first sheet and the second sheet. The nozzle is provided further to an upstream side in a feed direction of the first sheet than a position at which the first sheet overlays the second sheet. The feed mechanism includes an upper roller, a lower roller, an upper roller support member, and a guide member. The upper roller is adapted to be disposed above the first sheet and the second sheet at the position at which the first sheet overlays the second sheet. The upper roller has a width greater than a width of the first sheet. The upper roller is adapted to come into contact with a face of the first sheet that is opposite to the bonding face. The width of the first sheet is orthogonal to a feed direction of the first sheet. The lower roller faces the upper roller. The lower roller is adapted to come into contact with a bottom face of the second sheet, and is adapted to pressure-bond the first sheet and the second sheet between the lower roller and the upper roller. The upper roller support member rotatably supports the upper roller. The guide member is provided on the upper roller support member and faces an outer circumferential face of the upper roller at a position further to the upstream side in the feed direction of the first sheet than the position at which the first sheet overlays the second sheet. The guide member is adapted to guide the first sheet to the outer circumferential face of the upper roller. The guide member includes a main body portion and a fixing portion. The main body portion extends in parallel to a width direction of the outer circumferential face of the upper roller, and curves along the outer circumferential face on a downstream side in the feed direction of the first sheet. The fixing portion fixes the main body portion to the upper roller support member. The guide member is provided on the upper roller support member such that the guide member faces the outer circumferential face of the upper roller, and thus, the bonding device can install the guide member close to the nozzle. As a result, the bonding device can suppress a variation in a position of the first sheet with respect to an application position of the adhesive, and can thus suppress a bonding defect of the first sheet with respect to the second sheet.

In the bonding device, an end of the main body portion on the upstream side, in the feed direction of the first sheet, may curve to a side opposite to a face that guides the first sheet. Thus, when feeding the first sheet, the guide member can reliably guide the first sheet to the outer circumferential face of the upper roller without the first sheet becoming caught up on the main body portion.

In the bonding device, the main body portion may include a first contact portion that is adapted to come into contact with one end in a width direction of the first sheet, and a second contact portion that is provided on the main body portion so as to be capable of moving in a first direction parallel to the width direction of the upper roller, and that is capable of coming into contact with another end on a side opposite to the one end of the first sheet. As a result, the bonding device can guide the first sheet, which is moving along the main body portion, toward the upper roller without any displacement of the first sheet in the first direction.

In the bonding device, the fixing portion may include a change mechanism that supports the main body portion such that the main body portion is able to move in the first direction, and is adapted to change a position of the main body portion in the first direction. As a result, the bonding device can change the position of the main body portion in accordance with a bonding position of the first sheet, and can thus guide the first sheet to an appropriate position with respect to the outer circumferential face of the upper roller.

In the bonding device, the main body portion may include a screw holding member that rotatably holds a head of a screw in a state in which a shaft portion of the screw is oriented in the first direction, and a screw hole that is provided on one end side in the first direction of the main body portion in a side face facing the screw held by the screw holding member, that extends along an axial line of the shaft portion, and that is screwably engaged with the shaft portion. As a result, when the head of the screw is rotated using a tool, the shaft portion of the screw advances into or retracts from the screw hole, and the position of the main body portion can thus be minutely adjusted in the first direction.

### BRIEF DESCRIPTION OF THE DRAWINGS

Exemplary embodiments of the present invention will be described below in detail with reference to the accompanying drawings in which:
FIG. 1 is an oblique view of a bonding device 1 placed on a top face of a work bench 200;
FIG. 2 is an oblique view of the bonding device 1;
FIG. 3 is a left side view of the bonding device 1;
FIG. 4 is an oblique view showing an internal structure of the bonding device 1;
FIG. 5 is a left side view of the bonding device 1 when a nozzle 10 has moved to a proximate position;
FIG. 6 is a left side view of the bonding device 1 when the nozzle 10 has moved to a retracted position;
FIG. 7 is an enlarged view of a region W2 that is shown in FIG. 5;
FIG. 8 is a transparent oblique view of an internal structure of the nozzle 10;
FIG. 9 is an oblique view showing a coupling structure of the leading end of a lever 9 to the nozzle 10;
FIG. 10 is an exploded oblique view of a tape guide 90;
FIG. 11 is an oblique view of the tape guide 90;
FIG. 12 is a rear view of the tape guide 90;
FIG. 13 is an enlarged view of an area W1 shown in FIG. 2;
FIG. 14 is an oblique view of the surrounding of the tape guide 90 as seen diagonally from the rear;
FIG. 15 is an oblique view of the surrounding of the nozzle 10 as seen from below (the nozzle 10 is in a first position); and
FIG. 16 is an oblique view of the surroundings of the nozzle 10 as seen from below (the nozzle 10 is in a second position).

### DETAILED DESCRIPTION OF EXEMPLARY EMBODIMENTS

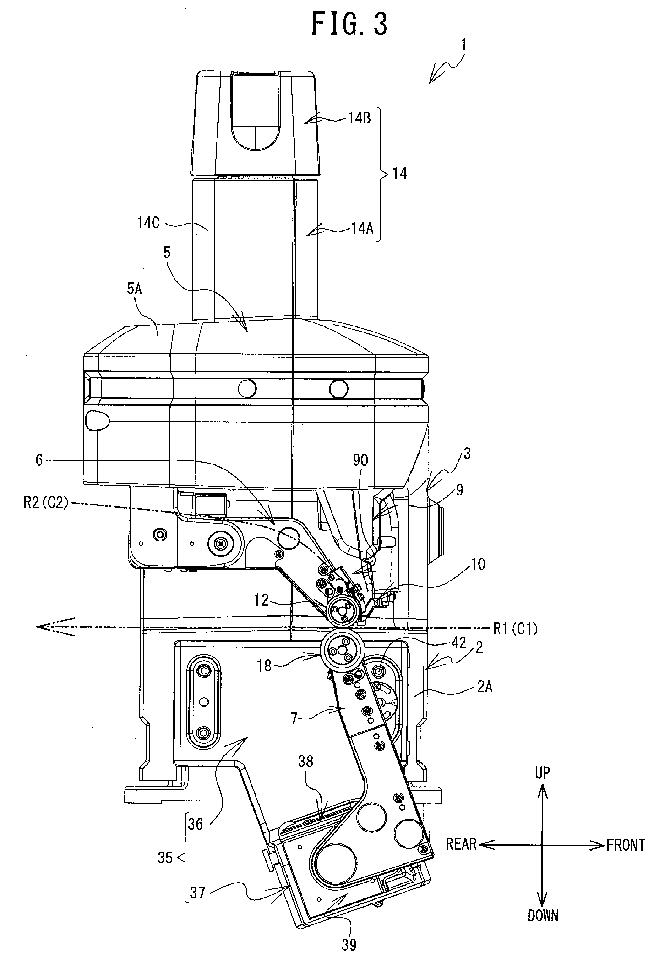

An embodiment of the present invention will be explained. In the following explanation, up and down directions, left and right directions, and front and rear directions as indicated by arrows in the drawings are used. A bonding device 1 bonds two cloths using an adhesive. As shown in FIG. 3, the bonding device 1 can perform a tape bonding process, for example, in which a long tape C2 that is made of fabric is adhered, using adhesive, to a flat cloth C1. A width of the tape C2 is narrower than that of the cloth C1. In the present embodiment, the bonding device 1 that performs the tape bonding process is explained.

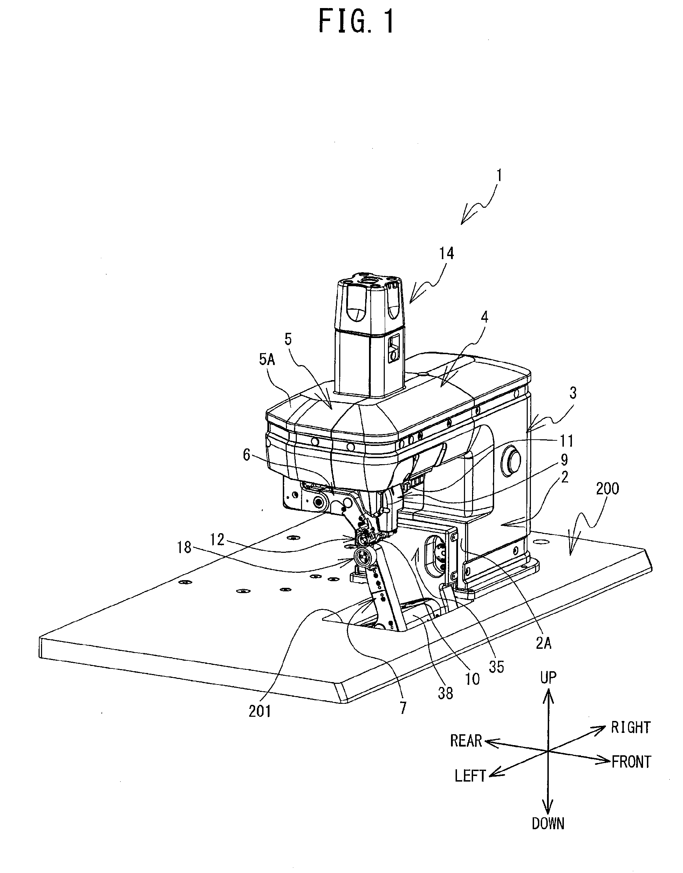

As shown in FIG. 1, the bonding device 1 is placed on a top face of a work bench 200. The bonding device 1 includes a base portion 2, a pillar 3, an arm 4, a head 5, an upper feed arm 6, a lower feed arm 7, a lever 9, a nozzle 10, and a control unit etc.

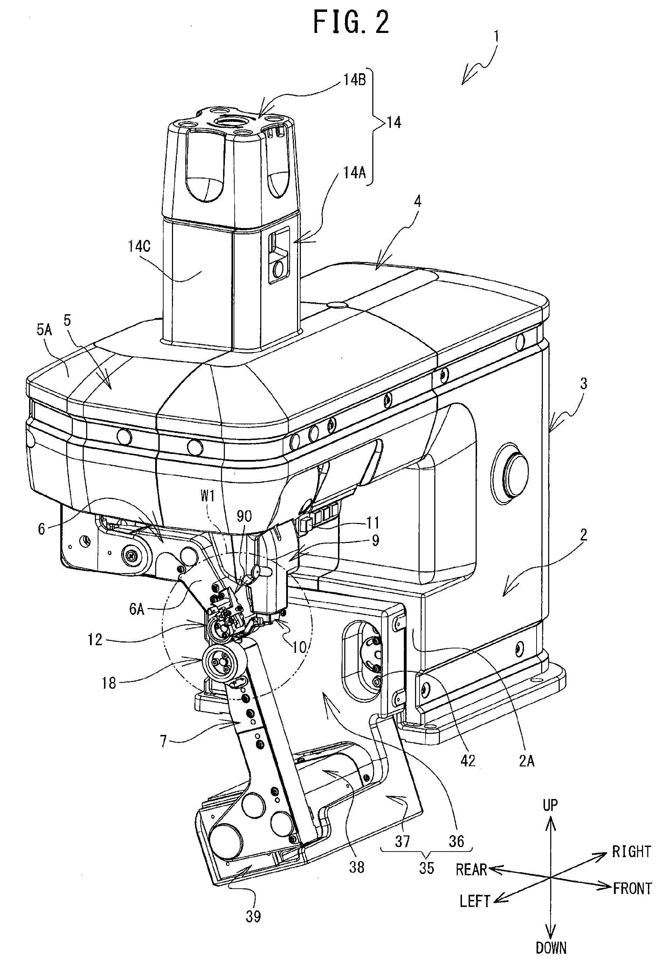

As shown in FIG. 2, the base portion 2 is a substantially cuboid shape and is fixed to the top face of the work bench 200 using screws. An attachment face 2A is provided on a left side face of the base portion 2. The attachment face 2A is parallel to the vertical direction. The pillar 3 is substantially a rectangular column that extends vertically upward from a top face of the base portion 2. The arm 4 extends to the left from the upper end of the pillar 3. A command switch 11 is provided on a front face of a lower portion of the arm 4. The command switch 11 accepts a command to swing the lever 9, for example, and move the nozzle 10 to a proximate position or to a retracted position. The head 5 is a portion that extends farther to the left from the left end of the arm 4.

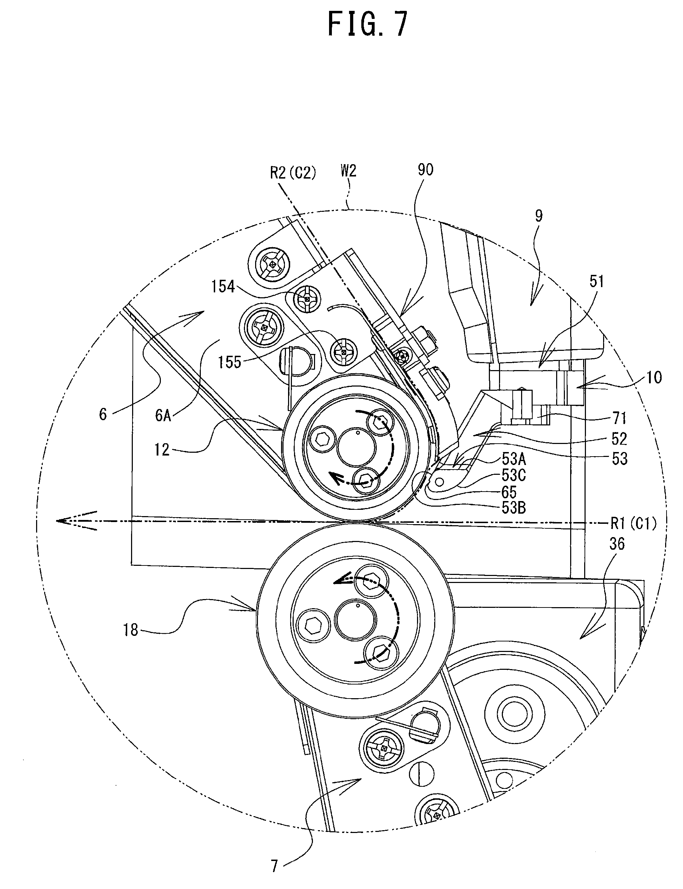

As shown in FIG. 2 to FIG. 5, the upper feed arm 6 extends substantially horizontally from the rear end side of a bottom face of the head 5, and the leading end side of the upper feed arm 6 bends diagonally forward and downward. The leading end of the upper feed arm 6 rotatably supports an upper roller 12. The upper roller 12 is driven by an upper roller drive mechanism 15 and rotates clockwise as seen from the left side (refer to FIG. 7). The upper roller drive mechanism 15 is provided inside the head 5. Using screws 154 and 155 (refer to FIG. 7), a plate-shaped tape guide 90 is fixed to the upper feed arm 6, in the vicinity of the front end of a left side face 6A. The tape guide 90 guides the tape C2, which is supplied from the rear of the bonding device 1, along an outer circumferential face of an upper portion of the upper roller 12.

As shown in FIG. 2 and FIG. 3, the lower feed arm 7 is detachably attached to the attachment face 2A of the base portion 2, via an attachment member 35. The lower feed arm 7 extends diagonally upward and toward the rear from a lower portion of the lower feed arm 7 that is positioned lower than the base portion 2. The leading end of the lower feed arm 7 rotatably supports a lower roller 18. The lower roller 18 faces the upper roller 12. A lower portion of the lower feed arm 7 and a lower portion of the attachment member 35 are disposed inside an opening 201 in the top face of the work bench 200 by being lowered into the opening 201 from above, and are positioned lower than a bottom portion of the base portion 2. The opening 201 is provided in the top face of the work bench 200.

The attachment member 35 includes a fixing portion 36 and a support portion 37. The fixing portion 36 is a substantially rectangular plate shape, and is fixed to the attachment face 2A using screws 42. The support portion 37 is coupled to the lower end of the fixing portion 36 and extends to the left. The support portion 37 is a substantial box shape that is open upward and to the left. A bottom face of the support portion 37 is inclined downward from the front end toward the rear end. A bracket 39 is fixed to the interior of the support portion 37. The bracket 39 has a substantially rectangular plate face as seen from the left side. A lower feed motor 38 is fixed to the right side of the plate face of the bracket 39. The lower end of the lower feed arm 7 is fixed to the left side of the plate face of the bracket 39. A drive shaft of the lower feed motor 38 is connected to a lower roller drive mechanism, via the bracket 39. The lower roller drive mechanism is provided inside the lower feed arm 7. The lower roller drive mechanism includes a plurality of pulleys and a timing belt etc., and transmits the power of the lower feed motor 38 to the lower roller 18. Thus, the lower roller 18 rotates counterclockwise as seen from the left side (refer to FIG. 7). Attachment positions of the lower feed motor 38 and the bracket 39 with respect to the support portion 37 in the left-right direction can be adjusted. As a result, the bonding device 1 can adjust the position of the lower roller 18 in the left-right direction, in accordance with a position of the application of the adhesive.

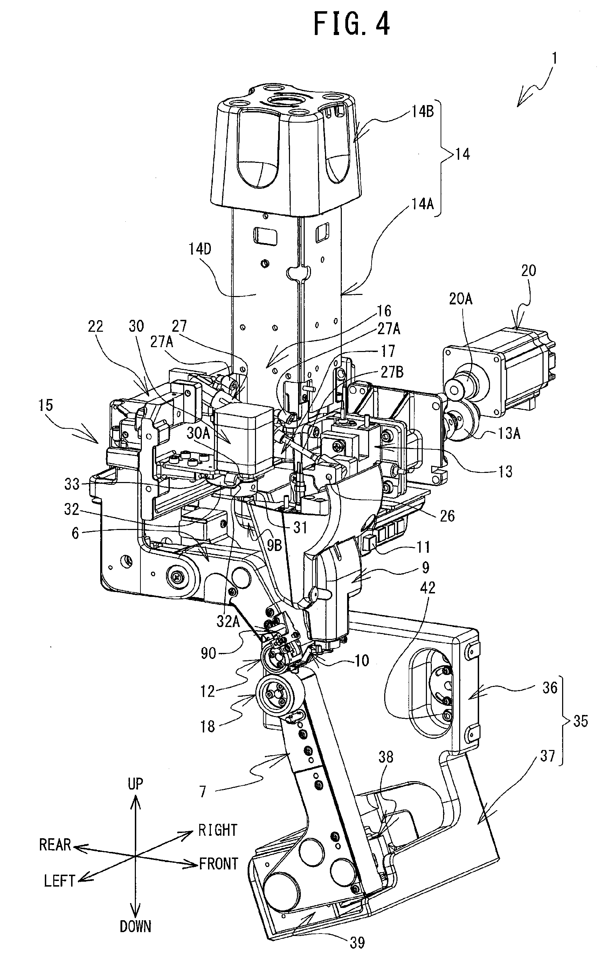

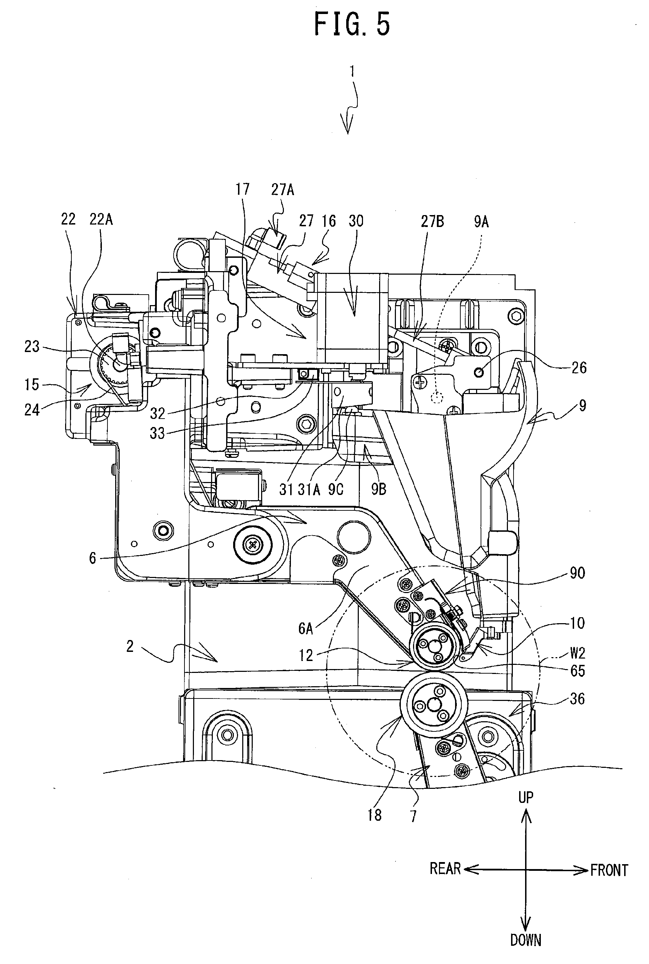

As shown in FIG. 2 and FIG. 3, the lever 9 is arm-shaped, and extends downward from the front end side of the bottom face of the head 5. A pivotal shaft 9A (refer to FIG. 5) rotatably supports the upper end of the lever 9. The pivotal shaft 9A extends in the left-right direction. The left end of the pivotal shaft 9A supports the upper end of the lever 9, and the right end of the pivotal shaft 9A is connected to a gear pump 13. The lower end of the lever 9 can swing in the front-rear direction around the pivotal shaft 9A. As shown in FIG. 5, a protrusion 9B is provided on an upper portion of a rear face side of the lever 9. The protrusion 9B is a substantially rectangular column that protrudes to the rear. A top face of the protrusion 9B is provided with a hemispherical contacted face 9C. The contacted face 9C comes into contact, from below, with a cam face 31 A of a cam rotation body 31. An adhesive supply channel is provided inside the lever 9. The upper end of the supply channel is connected to an adhesive flow channel provided inside the pivotal shaft 9A. The adhesive that is supplied to the supply channel by the gear pump 13 (refer to FIG. 4) via the flow channel is supplied to the nozzle 10. The lever 9 is provided with a bar-shaped heater in the vicinity of the supply channel. The heater heats the adhesive flowing through the supply channel of the lever 9. The nozzle 10 is detachably mounted on the lower end of the lever 9. The nozzle 10 includes a plurality of discharge outlets 65 (refer to FIG. 7), in a position facing the outer circumferential face of the upper roller 12. The discharge outlets 65 are openings that discharge the adhesive.

The control unit is placed on the bottom face of the work bench 200, and controls the operation of the bonding device 1. In the bonding device 1, an operation panel can be provided on the top face of the work bench 200. The control unit controls the operation of the bonding device 1 in accordance with operations received by the command switch 11 and the operation panel.

A feed path R1 is a feed path of the cloth C1 in the tape bonding process. A feed path R2 is a feed path of the tape C2 in the tape bonding process. The upper roller 12 and the lower roller 18 face each other in the up-down direction from either side of the feed paths R1 and R2 and can come into contact with each other. A contact point at which the upper roller 12 and the lower roller 18 come into contact with each other is a pressure bonding point at which the upper roller 12 and the lower roller 18 pressure-bond the cloth C1 and the tape C2 with the adhesive between the cloth C1 and the tape C2. The feed path R1 extends from the front of the bonding device 1 toward the rear, passing through the pressure bonding point. The feed path R2 passes from a tape supply source along the outer circumferential face of the upper roller 12, after passing the top portion of the upper roller 12, and extends to the rear, passing through the pressure bonding point. The tape supply source is installed to the rear of the bonding device 1.

The axial directions of the rotational axes of the upper roller 12 and the lower roller 18 are parallel to the left-right direction of the bonding device 1. The outside diameter of the lower roller 18 is greater than the outside diameter of the upper roller 12. The discharge outlets 65 of the nozzle 10 face the outer circumferential face of the upper roller 12 and are separated from the outer circumferential face by a specified clearance, at a position further to an upstream side of the feed path R2 than the pressure bonding point (refer to FIG. 7). The discharge outlets 65 discharge the adhesive toward a bonding face of the tape C2 on the opposite side from the upper roller 12. Thus, by rotationally driving the upper roller 12 and the lower roller 18, the bonding device 1 is able to overlay the bonding face of the tape C2, to which the adhesive has been applied, onto the top face of the cloth C1 placed below, then feed the cloth C 1 and the tape C2 toward the rear while pressure bonding them together at the pressure bonding point.

As shown in FIG. 4, the gear pump 13, a cartridge mounting portion 14, the upper roller drive mechanism 15, a lever swinging mechanism 16, a nozzle clearance adjustment mechanism 17, and the like are provided on the inner side of a cover 5A of the head 5. The gear pump 13 is provided to the front right of the head 5, and an adhesive supply channel is provided inside the gear pump 13. A pump motor 20 is provided inside the arm 4 (refer to FIG. 2). A gear 20A is fixed to a rotating shaft of the pump motor 20, and meshes with a gear 13A of the gear pump 13. When the pump motor 20 operates, the gear 13 A operates. When the gear 13 A operates, the gear pump 13 draws an appropriate amount of the adhesive out of a cartridge that is mounted in the cartridge mounting portion 14, and supplies the adhesive to the supply channel inside the lever 9, via the flow channel inside the pivotal shaft 9A.

The cartridge mounting portion 14 is provided to the rear of the gear pump 13, and includes a main body 14A and a lid 14B. The main body 14A includes a cover 14C (refer to FIG. 3) and a storage portion 14D. The cover 14C covers a periphery of the storage portion 14D. The storage portion 14D is provided standing vertically, and is a bottomed rectangular cylinder whose top portion is open. The cartridge is detachably mounted in the storage portion 14D. The cartridge houses a hot melt adhesive. When the cartridge is mounted in the storage portion 14D, the adhesive can be supplied to the gear pump 13. The hot melt adhesive liquefies when the adhesive is heated to a predetermined temperature, and hardens at a temperature lower than the predetermined temperature. The storage portion 14D is provided with a pair of heaters on both sides of the cartridge. The pair of heaters heat up the cartridge. As a result, the adhesive melts and becomes liquefied. The lid 14B is detachably attached to an upper portion of the storage portion 14D, and opens and closes the upper portion opening of the storage portion 14D. When the lid 14B is screwed on by a rotation operation, the lid 14B can be fixed to the upper portion of the storage portion 14D, and can be removed by being loosened.

As shown in FIG. 4 and FIG. 5, the upper roller drive mechanism 15 is provided on the left end side of the head 5. The upper roller drive mechanism 15 includes the upper feed motor 22, a drive pulley 23, a first driven pulley, a first timing belt 24, a second driven pulley, a second timing belt and the like. The first driven pulley, the second driven pulley and the second timing belt are provided inside the upper feed arm 6. The upper feed motor 22 is fixed, on a rear face side of the head 5, to the upper portion of the head 5 on the left end side. A drive shaft 22A of the upper feed motor 22 extends to the left. The drive pulley 23 is fixed to the drive shaft 22A. The first timing belt 24 is provided around the drive pulley 23 and the first driven pulley. The second driven pulley is fixed to a rotating shaft of the upper roller 12. The second timing belt is provided around the first driven pulley and the second driven pulley. Thus, the power of the upper feed motor 22 is transmitted to the upper roller 12, via the drive pulley 23, the first driven pulley, the first timing belt 24, the second driven pulley, and the second timing belt. As a result, the upper roller 12 rotates clockwise as seen from the left side (refer to FIG. 7).

The lever swinging mechanism 16 is provided on the left end side of the head 5. The lever swinging mechanism 16 includes an air cylinder 27 and a coupling shaft 26. The air cylinder 27 is adjacent to a left side of the storage portion 14D of the cartridge mounting portion 14. The air cylinder 27 includes two air inlets 27A, to the front and the rear. Intake-exhaust hoses are connected to the two air inlets 27A. The bonding device 1 controls the intake and exhaust of compressed air from the intake-exhaust hoses to the two air inlets 27A. A position of a piston inside the air cylinder 27 moves according to the control of the air intake and exhaust. A rod-shaped movable portion 27B extends in the front-rear direction, and is connected to the piston. When the piston moves, the movable portion 27B moves in the front-rear direction. The coupling shaft 26 is provided on the leading end of the movable portion 27B. The coupling shaft 26 is rotatably coupled to the lever 9, at a position separated upward and to the front from the pivotal shaft 9A of the lever 9.

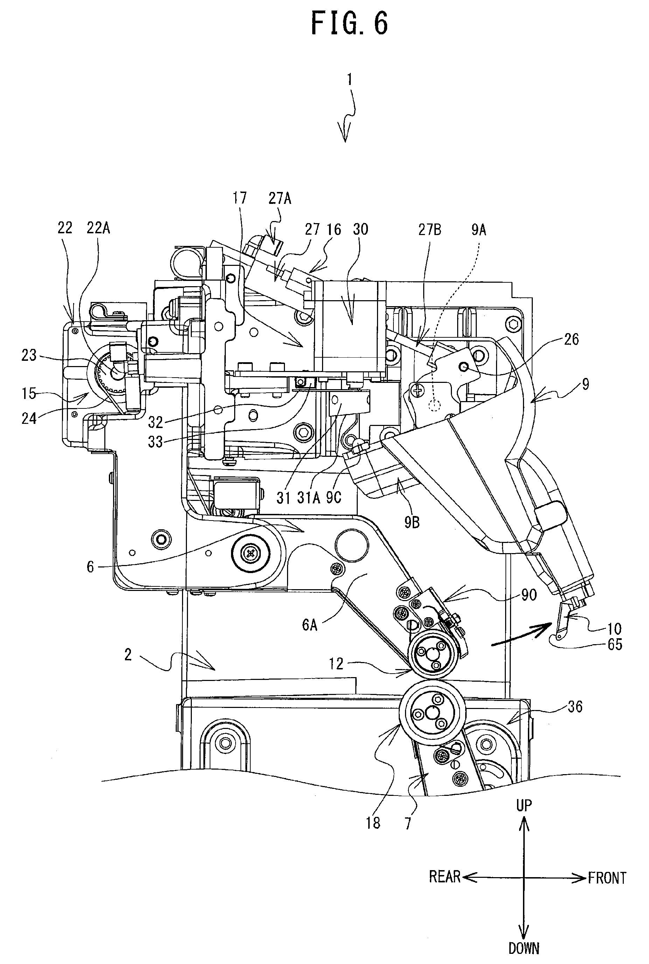

As shown in FIG. 5, when the movable portion 27B of the air cylinder 27 moves downward and to the front, the movable portion 27B moves the coupling shaft 26 forward. Thus, the lever 9 swings clockwise, as seen from the left side, around the pivotal shaft 9A, and the nozzle 10 moves to the proximate position. As shown in FIG. 6, when the movable portion 27B of the air cylinder 27 moves upward and to the rear, the movable portion 27B moves the coupling shaft 26 rearward. Thus, the lever 9 swings counterclockwise, as seen from the left side, around the pivotal shaft 9A, and the nozzle 10 moves to the retracted position. The proximate position is a position where the discharge outlets 65 of the nozzle 10 are close to the outer circumferential face of the upper roller 12 from the front. During the bonding operation, the bonding device 1 moves the nozzle 10 to the proximate position. The retracted position is a position where the discharge outlets 65 are significantly distant from the outer circumferential face of the upper roller 12 toward the front. For example, when the tape C2 is disposed along the outer circumferential face of the upper roller 12, the bonding device 1 moves the nozzle 10 to the retracted position.

The nozzle clearance adjustment mechanism 17 is provided to the left of the air cylinder 27. The nozzle clearance adjustment mechanism 17 includes an adjustment motor 30, the cam rotation body 31, an origin point sensor 33, a detection plate 32 and the like. A drive shaft 30A of the adjustment motor 30 extends downward. The cam rotation body 31 is a substantially circular cylindrical body that extends in the up-down direction. The top face of the cam rotation body 31 is coupled to the lower end of the drive shaft 30A. The cam rotation body 31 is provided with the cam face 31A on its bottom face. The cam face 31A is an inclined face. When the lever 9 swings around the pivotal shaft 9A and the nozzle 10 moves to the proximate position, the hemispherical contacted face 9C provided on the top face of the protrusion 9B of the lever 9 comes into contact with the cam face 31A from below. When the adjustment motor 30 operates, the cam rotation body 31 rotates together with the drive shaft 30A. Thus, a contact position of the contacted face 9C with respect to the cam face 31 A changes. Depending on the contact position with respect to the cam face 31A, the contacted face 9C moves in the up-down direction, and the lever 9 swings around the pivotal shaft 9A. Thus, the bonding device 1 can minutely adjust a clearance between the nozzle 10 and the outer circumferential face of the upper roller 12, by driving the adjustment motor 30 when the nozzle 10 is in the proximate position.

The origin point sensor 33 is provided in the vicinity of the drive shaft 30A of the adjustment motor 30. The detection plate 32 is substantially disk shaped and is fixed to the top face of the cam rotation body 31. The detection plate 32 extends substantially horizontally below the origin point sensor 33, and is provided with a notch-shaped edge portion 32A (refer to FIG. 4). The origin point sensor 33 detects an origin point of the adjustment motor 30 by detecting the position of the edge portion 32A.

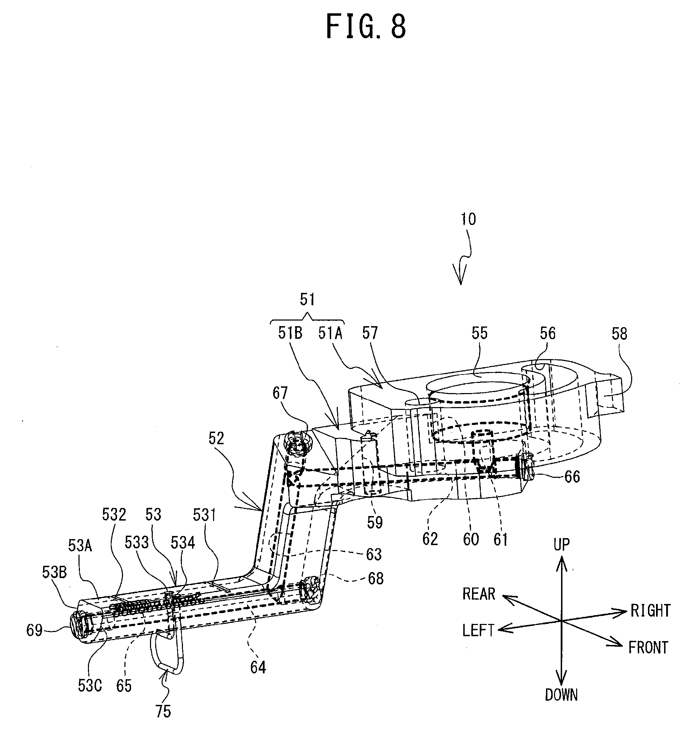

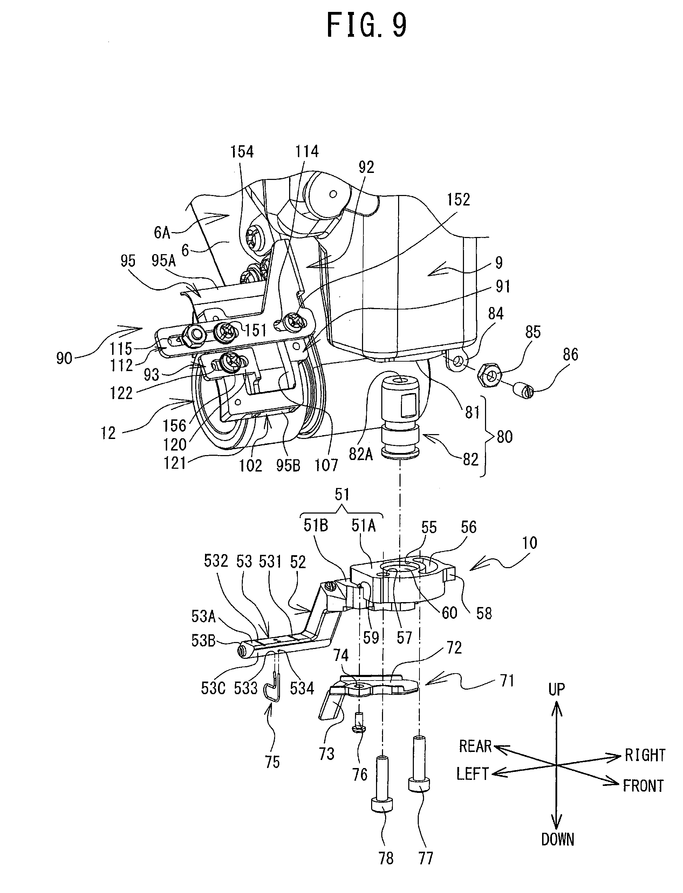

The nozzle 10 is a metal component. As shown in FIG. 8 and FIG. 9, the nozzle 10 is provided with a discharge portion 53, a support portion 52, a rotating coupling portion 51, and an indicator member 75. Hereinafter, a direction of the nozzle 10 indicates a direction at the time of the bonding operation. The discharge portion 53 is bar shaped and extends substantially horizontally in the left-right direction, and is provided with the plurality of discharge outlets 65. The support portion 52 is a substantially columnar shape, and extends to the front and diagonally upward from the right end of the discharge portion 53. The rotating coupling portion 51 extends from the upper end of the support portion 52 while bending to the right, and is rotatably coupled to a coupling receiving portion 80 provided on the lower end of the lever 9.

The rotating coupling portion 51 is provided with a cylindrical portion 51A and a protruding portion 51B. The cylindrical portion 51 A extends in the up-down direction and is a bottomed substantially cylindrical shape. The protruding portion 51B is substantially bar shaped and extends to the left from the bottom face and the left side face of the cylindrical portion 51A. The cylindrical portion 51A is provided with an opening 55, a hollow portion 60, a first flow channel 61, a guide hole 56, a fixing hole 57, a locking portion 58, and a screw hole 59. The opening 55 is formed in a substantially circular shape in a plan view, in substantially the center of the top face of the cylindrical portion 51A. The hollow portion 60 is a hollow with a large diameter formed on the inside of the cylindrical portion 51A, and is continuous with the opening 55. The first flow channel 61 is a flow channel for the adhesive and extends in the up-down direction. The first flow channel 61 is coaxial with a bottom portion of the hollow portion 60 and is continuous with the hollow portion 60. The diameter of the first flow channel 61 is smaller than the diameter of the hollow portion 60.

The guide hole 56 is formed in a substantially circular arc shape in a plan view so as to surround part of a periphery on the right side of the opening 55 in the top face of the cylindrical portion 51 A, and penetrates the cylindrical portion 51 A in the up-down direction. The fixing hole 57 is provided in the top face of the cylindrical portion 51A, to the left side of the opening 55, and penetrates the cylindrical portion 51A in the up-down direction. The locking portion 58 protrudes to the right, from a position on the side face of the cylindrical portion 51 A corresponding to the guide hole 56.

A second flow channel 62 and the screw hole 59 are provided inside the protruding portion 51B. The second flow channel 62 is a flow channel for the adhesive and extends along an extending direction of the protruding portion 51B. The second flow channel 62 is orthogonal to and continuous with the lower end of the first flow channel 61. The right end of the second flow channel 62 penetrates the right end of the protruding portion 51B. A screw 66 is removably fastened into the right end of the second flow channel 62. The screw hole 59 is provided in the bottom face of a section of the protruding portion 51B that protrudes further to the left than the cylindrical portion 51 A. The screw hole 59 penetrates in the up-down direction.

A third flow channel 63 is provided inside the support portion 52. The third flow channel 63 is a flow channel for the adhesive, and extends along an extending direction of the support portion 52. The third flow channel 63 intersects the left end of the second flow channel 62 and is continuous with the second flow channel 62. The upper end of the third flow channel 63 penetrates the upper end of the support portion 52. A screw 67 is removably fastened into the upper end of the third flow channel 63.

A fourth flow channel 64 is provided inside the discharge portion 53. The fourth flow channel 64 is a flow channel for the adhesive, and extends along an extending direction of the discharge portion 53. The fourth flow channel 64 intersects the third flow channel 63 and is continuous with the third flow channel 63. Both ends of the fourth flow channel 64 in an extending direction respectively penetrate both ends of the discharge portion 53 in the extending direction. A screw 68 is removably fastened into the right end of the fourth flow channel 64. A screw 69 is removably fastened into the left end of the fourth flow channel 64.

A cross section of the discharge portion 53 is formed in a substantial fan shape, and the discharge portion 53 is provided with a top face 53A, a back face 53B, and a front face 53C. The top face 53A extends substantially horizontally. When the nozzle 10 is mounted on the lower end of the lever 9, the back face 53B faces the outer circumferential face of the upper roller 12 (refer to FIG. 7). The front face 53C is a face on the opposite side from the upper roller 12 with respect to the back face 53B, and has a tapered shape in which it is inclined downward from its upper end toward the downstream side of the feed path R1 of the cloth C1. The back face 53B is provided with the plurality of discharge outlets 65 in substantially the center of the back face 53B in an extending direction such that they are aligned in the extending direction. Each of the plurality of discharge outlets 65 are continuous with the fourth flow channel 64 and can discharge the adhesive. The top face 53A is provided with a pair of marking grooves 531 and 532. The marking grooves 531 and 532 are respectively provided in positions corresponding to both ends in an extending direction of the plurality of discharge outlets 65. The marking grooves 531 and 532 are linear and extend in a direction orthogonal to an extending direction of the top face 53A. The marking grooves 531 and 532 indicate both end positions of the plurality of discharge outlets 65. Thus, by verifying the positions of the marking grooves 531 and 532 of the top face 53A, the user can easily recognize the positions of the plurality of discharge outlets 65, even without being able to see the back face 53B that faces the outer circumferential face of the upper roller 12.

A pair of through holes 533 and 534, which are aligned in the front-rear direction, are provided in a central position between the marking grooves 531 and 532 in the top face 53A. The through holes 533 and 534 penetrate the discharge portion 53 in the up-down direction. The indicator member 75 is formed, for example, from a wire that is bent in a substantial L shape apart from portions at both ends. Both the ends, which extend upward, are inserted into the through holes 533 and 534 from the lower side of the discharge portion 53, and fixed therein (refer to FIG. 9). As a result, the L-shaped portion of the indicator member 75 protrudes to the rear on the lower side of the discharge portion 53. The indicator member 75 indicates a center position of the plurality of discharge outlets 65. Thus by verifying the position of the indicator member 75, the user can easily recognize a center position of a range over which the adhesive is discharged by the plurality of discharge outlets 65. Note that, in the nozzle 10 having the above-described structure, by removing the screws 66 to 69, the user can draw out adhesive that has accumulated inside the first flow channel 61 to the fourth flow channel 64, and carry out cleaning using a brush or the like.

A resin cover 71 is a plate made of a synthetic resin and is formed in a substantial L shape. The high temperature adhesive flows through the first flow channel 61 to the fourth flow channel 64 of the nozzle 10, and thus surfaces of the nozzle 10 reach a high temperature. The resin cover 71 is attached to faces of the nozzle 10 that could possibly be touched by a finger or fingers of the user. The faces that could possibly be touched by the finger or fingers of the user are the bottom face of the protruding portion 51B of the rotating coupling portion 51, and the front face and the right side face of the support portion 52. The resin cover 71 is provided with a first cover portion 72 and a second cover portion 73. The first cover portion 72 is a plate that corresponds to the size of the bottom face of the protruding portion 51B and that extends substantially horizontally, and is provided with a fixing hole 74. The second cover portion 73 is a plate that corresponds to the size of the front face of the support portion 52 and extends diagonally downward from one end of the first cover portion 72, and is formed in a substantial L shape in a plan view. The first cover portion 72 covers the bottom face of the protruding portion 51B, and the second cover portion 73 covers the front face and the right side face of the support portion 52. A screw 76 is fastened into the screw hole 59 provided in the protruding portion 51B of the nozzle 10, via the fixing hole 74. The resin cover 71 is fixed to the nozzle 10. For example, when the user adjusts the positions of the cloth C1 and the tape C2 below the nozzle 10, it is possible to inhibit the finger or fingers of the user from directly touching the high temperature nozzle 10.

The coupling receiving portion 80 is provided on the lower end of the lever 9. The coupling receiving portion 80 is provided with a mounting hole 81 and a bush 82. The mounting hole 81 is provided in the lower end of the lever 9, and is continuous with the supply channel inside the lever 9. The bush 82 is a substantially cylindrical shape and is mounted in the mounting hole 81. An adhesive flow channel 82A is provided inside the bush 82. When the bush 82 is mounted in the mounting hole 81, the lower end side of the bush 82 protrudes downward from the lower end of the lever 9. The supply channel inside the lever 9 is connected to the flow channel 82A inside the bush 82.

A support nut 84, a nut 85, and a bolt 86 are provided on a front right portion of the lower end of the lever 9. The support nut 84 protrudes downward from the front right portion of the lower end of the lever 9, and a circular opening of the support nut 84 is disposed so as to be oriented in the front-rear direction. The nut 85 is disposed to the front of and in alignment with the opening of the support nut 84. The bolt 86 extends in the front-rear direction, and is fastened into the nut 85 and the support nut 84, in that order, from the front. The support nut 84 and the nut 85 configure a double nut structure. Therefore, the bolt 86 does not become loosened with respect to the support nut 84 as a result of vibrations or the like. The bolt 86 is disposed on a rotational locus of the locking portion 58 that rotates along with the rotating coupling portion 51. The rear end of the bolt 86 protrudes to the rear of the support nut 84. A position of the rear end of the bolt 86 is adjusted by an amount of tightening of the bolt 86 with respect to the support nut 84 and the nut 85. The rear end of the bolt 86 restricts a movement range of the rotating coupling portion 51, by coming into contact with the locking portion 58 of the rotating coupling portion 51 of the nozzle 10.

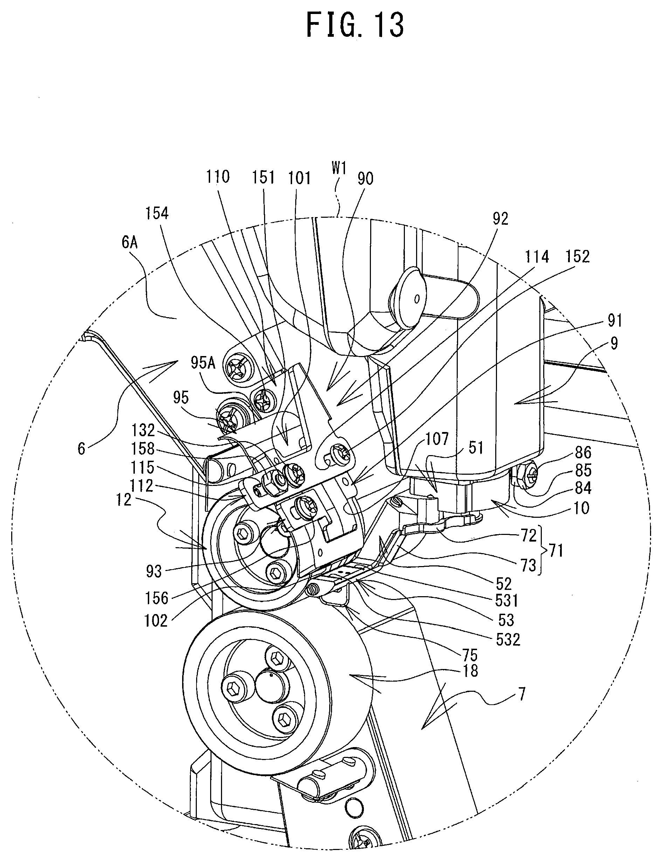

A method of mounting the nozzle 10 on the lower end of the lever 9 will be explained with reference to FIG. 9 and FIG. 13. The user inserts the bush 82 into the mounting hole 81 from below. The lower end side of the bush 82 protrudes downward from the mounting hole 81. The lower end side of the bush 82 is inserted inside the opening 55 of the rotating coupling portion 51 of the nozzle 10, and is disposed inside the hollow portion 60. The flow channel 82A inside the bush 82 and the first flow channel 61 of the rotating coupling portion 51 are continuous with each other. Via the guide hole 56 and the fixing hole 57, screws 77 and 78 are fastened into two screw holes provided in the lower end of the lever 9, and are fixed therein. As a result, the rotating coupling portion 51 is mounted on the lower end of the lever 9.

The locking portion 58 of the rotating coupling portion 51 is locked, from behind, by the rear end of the bolt 86 that is supported by the support nut 84 and the nut 85. When the locking portion 58 of the rotating coupling portion 51 is locked by the rear end of the bolt 86, the position of the nozzle 10 is a first position. As shown in FIG. 13, when the nozzle 10 is in the first position, the support portion 52 of the nozzle 10 is inclined from the rotating coupling portion 51 diagonally downward toward the vicinity of the right side of the outer circumferential face of the upper roller 12. The discharge portion 53 extends to the left from the lower end of the support portion 52, and is disposed facing the outer circumferential face of the upper roller 12. The plurality of discharge outlets 65 provided in the back face 53B of the discharge portion 53 face the outer circumferential face of the upper roller 12 at a position further to the upstream side of the feed path R2 than the pressure bonding point of the upper roller 12 with the lower roller 18 (refer to FIG. 7).

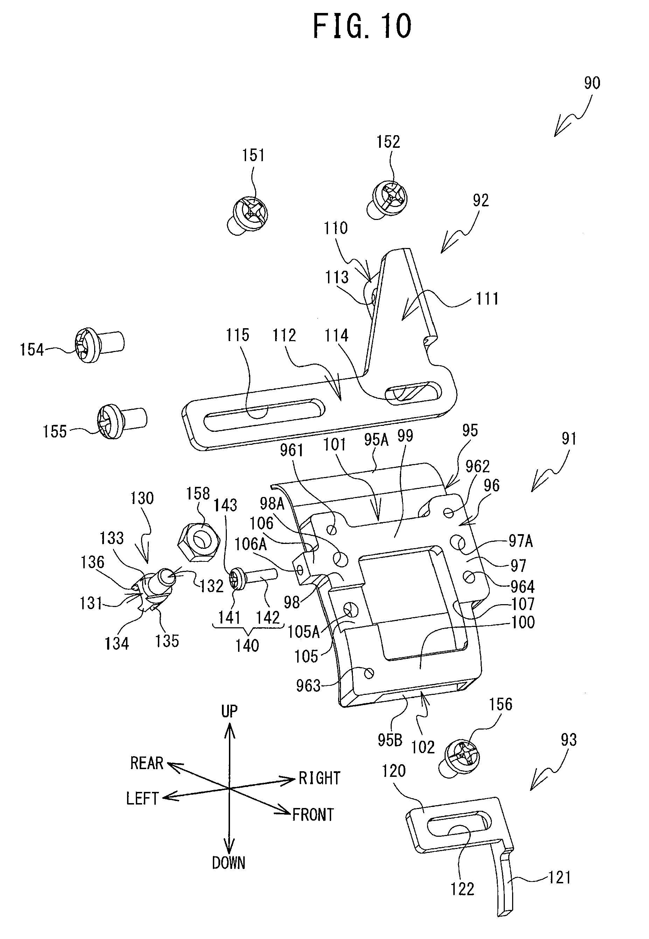

As shown in FIG. 10, the tape guide 90 is provided with a main body portion 91, a fixing portion 92, an adjustment portion 93, and a position adjustment tool 130. The main body portion 91 guides the tape C2 to the outer circumferential face of the upper roller 12. The fixing portion 92 fixes the main body portion 91 to the left side face 6A of the upper feed arm 6. The adjustment portion 93 adjusts a position, in the left-right direction, of the tape C2 in the main body portion 91. The position adjustment tool 130 performs minute adjustment of a position of the main body portion 91 in the left-right direction.

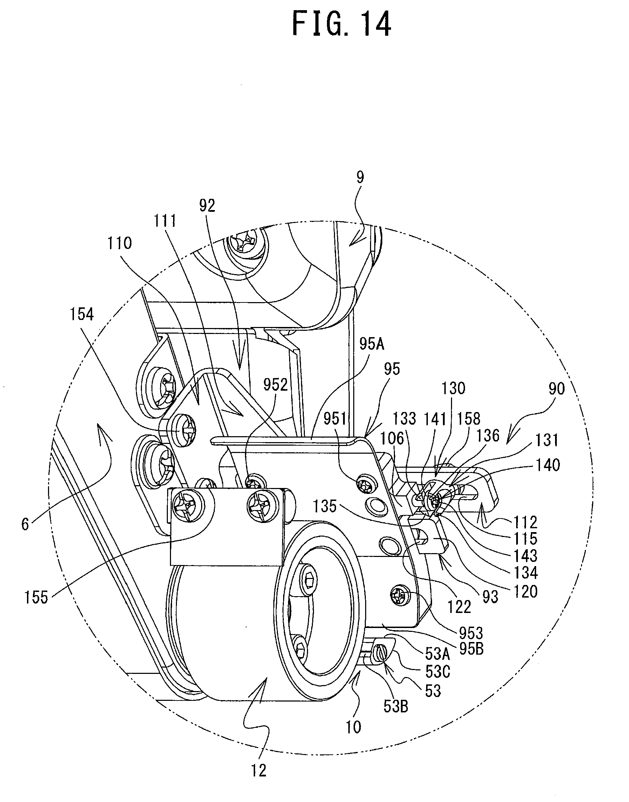

The main body portion 91 is provided with a guide plate 95 and a cover portion 96. The guide plate 95 is a substantially rectangular plate member and guides the tape C2 to the outer circumferential face of the upper roller 12. The bottom face side of the guide plate 95 faces a front side upper portion of the outer circumferential face of the upper roller 12, and the guide plate 95 is inclined diagonally upward toward the rear (refer to FIG. 14). An end 95A of the guide plate 95 on the upstream side in the feed direction of the tape C2 curves to the opposite side from the top face that guides the tape C2. An end 95B of the guide plate 95 on the downstream side in the feed direction of the tape C2 curves along the outer circumferential face of the upper roller 12. The cover portion 96 is a rectangular frame shape in a plan view, and is fixed to the top face of the guide plate 95. The cover portion 96 is provided with a right side wall 97, a left side wall 98, and bridging portions 99 and 100. The right side wall 97 is provided substantially perpendicularly to the right end of the top face of the guide plate 95. The left side wall 98 is provided substantially perpendicularly to the left end of the top face of the guide plate 95. The bridging portion 99 is provided extending between ends of the right side wall 97 and the left side wall 98, respectively, on the upstream side in the feed direction of the tape C2. The bridging portion 100 is provided extending between other ends of the right side wall 97 and the left side wall 98, respectively, on the downstream side in the feed direction of the tape C2.

A screw hole 97A is provided in the top face of the right side wall 97, in the vicinity of the bridging portion 99. A screw hole 98A is provided in the top face of the left side wall 98, in the vicinity of the bridging portion 99. The left side wall 98 is provided with a stepped portion 105 in an intermediate position between the bridging portions 99 and 100. The stepped portion 105 is recessed in a substantial U shape in a side view, and a screw hole 105A is provided in the center of a bottom portion of the stepped portion 105. A protruding portion 106 is provided on the left side face of the left side wall 98, in a position corresponding to the screw hole 98A. The protruding portion 106 is a substantially rectangular column that protrudes to the left from the left side face of the left side wall 98, and a screw hole 106A is provided in the left side face of the protruding portion 106. The screw hole 106A extends to the right inside the protruding portion 106. The cover portion 96 is provided with a window portion 107 that is substantially rectangular in a plan view, in a portion surrounded by the right side wall 97, the left side wall 98, and the bridging portions 99 and 100. The top face of the guide plate 95 is exposed via the window portion 107.

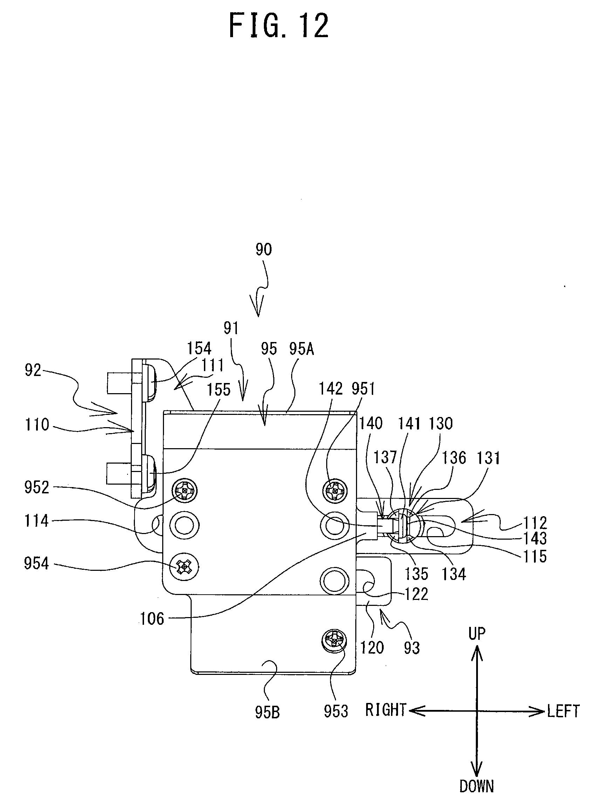

The cover portion 96 is provided with screw holes 961 and 963 in the top face of the left side wall 98, with the screw hole 98A and the screw hole 105A between them. The cover portion 96 is provided with screw holes 962 and 964 in the top face of the right side wall 97, with the screw hole 97A between them. The guide plate 95 is provided with four fixing holes in positions corresponding to the screw holes 961 to 964. As shown in FIG. 12, screws 951 to 954 are respectively fastened into the screw holes 961 to 964 via the four fixing holes, from the bottom face side of the guide plate 95. The cover portion 96 is thus fixed to the top face of the guide plate 95. A rectangular-shaped tape entrance 101 is formed in an end portion of the cover portion 96 on the upstream side in the feed direction of the tape C2. There is a gap between the top face of the guide plate 95 and the bridging portion 99. The tape entrance 101 is formed by a space that is surrounded by the top face of the guide plate 95, the bridging portion 99, the right side wall 97 and the left side wall 98. A rectangular-shaped tape exit 102 is formed in an end portion of the cover portion 96 on the downstream side in the feed direction of the tape C2. There is a gap between the top face of the guide plate 95 and the bridging portion 100. The tape exit 102 is formed by a space that is surrounded by the top face of the guide plate 95, the bridging portion 100, the right side wall 97 and the left side wall 98.

As shown in FIG. 10, the fixing portion 92 is substantially L-shaped in a plan view. The fixing portion 92 is provided with a fixing plate 110, a coupling portion 111, and a support portion 112. The fixing plate 110 is fixed to the left side face 6A of the upper feed arm 6. The support portion 112 supports the main body portion 91 such that the main body portion 91 faces the outer circumferential face of the upper roller 12. The coupling portion 111 couples the fixing plate 110 to the support portion 112. The fixing plate 110 is a plate member that is substantially rectangular in a side view (refer to FIG. 14). The fixing plate 110 is provided with a pair of fixing holes 113 (only one is illustrated in FIG. 10).

The support portion 112 is a horizontally long rectangular plate shape that extends in parallel to a left-to-right width direction of the guide plate 95. The support portion 112 extends to be longer than the width of the guide plate 95, and the left end of the support portion 112 protrudes further to the left than the left end face of the main body portion 91. A pair of long holes 114 and 115 are provided along an extending direction of the support portion 112. The long hole 114 is provided in the right side of the support portion 112. The long hole 115 is provided in the left side of the support portion 112. The long hole 115 is longer than the long hole 114. The coupling portion 111 is a plate shape that is substantially triangular in a plan view. The coupling portion 111 is folded over at a substantial right angle from the upper end of the fixing plate 110, and is coupled to the right side of the upper end of the support portion 112.

The adjustment portion 93 has a substantially reverse L shape in a plan view, namely, its shape has the reverse orientation to that of the fixing portion 92. The adjustment portion 93 is provided with a fixing portion 120 and a contact portion 121. The fixing portion 120 is a horizontally long rectangular plate shape that extends in parallel to the left-to-right width direction of the guide plate 95. The fixing portion 120 is provided with a long hole 122. The long hole 122 extends in parallel to an extending direction of the fixing portion 120. The contact portion 121 is a plate shape that is bent downward at a substantial right angle from the right end of the fixing portion 120, and extends toward the end 95B of the guide plate 95.

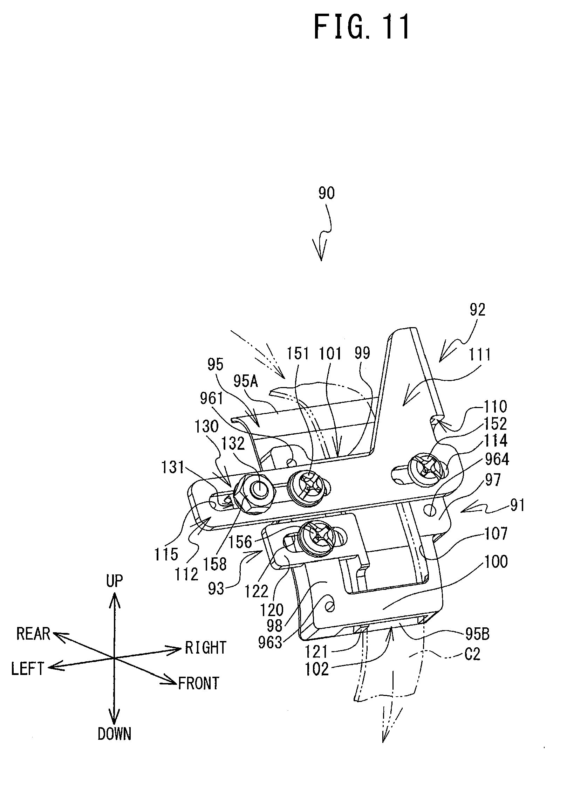

An assembled structure of the tape guide 90 will be explained with reference to FIG. 10 to FIG. 12. As shown in FIG. 10, the support portion 112 of the fixing portion 92 is disposed in the left-right direction along the top face of the bridging portion 99 of the cover portion 96 of the main body portion 91. The fixing plate 110 of the fixing portion 92 is disposed to the right of the main body portion 91. The long holes 114 and 115 of the support portion 112 are disposed so as to respectively face the screw holes 97A and 98A provided in the top face of the cover portion 96. A screw 151 is fastened into the screw hole 98A via the long hole 115. A screw 152 is fastened into the screw hole 97A via the long hole 114. As a result, the fixing portion 92 is fixed to the main body portion 91. The fixing portion 120 of the adjustment portion 93 is fitted, from above, into the stepped portion 105 in the top face of the left side wall 98 of the cover portion 96. The long hole 122 of the fixing portion 120 is disposed so as to face the screw hole 105A of the stepped portion 105. The contact portion 121 is inserted from above the window portion 107, and the contact portion 121 is disposed on the side of the tape exit 102. As shown in FIG. 11, the leading end of the contact portion 121 is positioned inside the tape exit 102, and extends as far as the end 95B of the guide plate 95. A screw 156 is fastened into the screw hole 105A via the long hole 122.

As shown in FIG. 13, the fixing plate 110 of the fixing portion 92 of the tape guide 90 comes into contact with the left side face 6A of the upper feed arm 6, and the screws 154 and 155 are fastened into a pair of fixing holes provided in the left side face 6A, via the pair of fixing holes 113 provided in the fixing plate 110. As a result, the tape guide 90 is fixed to the left side face 6A of the upper feed arm 6. The tape guide 90 is disposed so that the bottom face side of the guide plate 95 faces the front side upper portion of the outer circumferential face of the upper roller 12.

As shown in FIG. 10 and FIG. 12, the position adjustment tool 130 is provided with a screw retaining portion 131 and a shaft portion 132. The screw retaining portion 131 is provided with a bowl portion 133 and four leg portions 134 to 137. The bowl portion 133 is a bowl shape that is open downward. The leg portions 134 to 137 are provided on a peripheral end of the bowl portion 133 that is oriented downward, and each protrudes downward. As shown in FIG. 12, when the screw retaining portion 131 is seen from the bottom face side, a pair of the leg portions 134 and 135 and a pair of the leg portions 136 and 137 are positioned on mutually opposite sides with a center line of the bowl portion 133 therebetween. Thus, a gap between the leg portions 134 and 135, and a gap between the leg portions 136 and 137 face each other with the center line of the bowl portion 133 therebetween. A width of each of the gaps between the leg portions 134 to 137 is a length that can be gripped a head 141 of a screw 140 by the leg portions 134 to 137. As shown in FIG. 10, the shaft portion 132 is a male screw that extends upward from the top of the bowl portion 133.

The screw 140 is provided with the flange-shaped head 141 and a shaft portion 142. A tool insertion groove 143 is provided on an end of the head 141. The screw 140 is disposed substantially horizontally such that the head 141 is oriented to the left, and the shaft portion 142 is screwed into the screw hole 106A of the protruding portion 106 of the main body portion 91 (refer to FIG. 12).

A method of attaching the position adjustment tool 130 to the tape guide 90 will be explained with reference to FIG. 10 to FIG. 12 and FIG. 14. As shown in FIG. 10, the shaft portion 132 of the position adjustment tool 130 is inserted, from below, into the long hole 115 provided in the support portion 112 of the fixing portion 92. The upper end of the shaft portion 132 protrudes above the support portion 112 from the long hole 115, and a nut 158 is fastened onto the upper end of the shaft portion 132. The position adjustment tool 130 is thus attached to the lower side of the support portion 112 (refer to FIG. 11). The position of the position adjustment tool 130 is fixed by fastening the nut 158 onto the upper end of the shaft portion 132. The head 141 of the screw 140 is inserted into the gap between the leg portions 134 and 135 and the gap between the leg portions 136 and 137 of the position adjustment tool 130 (refer to FIG. 12). The tool insertion groove 143 of the head 141 faces leftward via the gap between the leg portions 134 and 136. The shaft portion 142 protrudes rightward of the position adjustment tool 130 via the gap between the leg portions 135 and 137, and is screwed into the screw hole 106A of the protruding portion 106. As shown in FIG. 12 and FIG. 14, the leg portions 134 to 137 rotatably hold the head 141 of the screw 140 and restrict movement of the head 141 in the left-right direction.

A method of adjusting the position of the main body portion 91 in the width direction of the upper roller 12 will be explained with reference to FIG. 11 to FIG. 13. When significantly moving the position of the main body portion 91 in the width direction of the upper roller 12, the user loosens the nut 158 and the screws 151 and 152. As a result, it is possible to move the main body portion 91 together with the position adjustment tool 130 in the left-right direction with respect to the support portion 112 of the fixing portion 92, within the range in the long diameter direction of the long hole 114. When the position of the main body portion 91 is decided, the nut 158, and the screws 151 and 152 are tightened.

When minutely adjusting the position of the main body portion 91 in the width direction of the upper roller 12, the user does not loosen the nut 158, loosens only the screws 151 and 152, and uses the position adjustment tool 130. As shown in FIG. 12, the user inserts a tool into the tool insertion groove 143 from the gap between the leg portions 134 and 136, and rotates the screw 140 in one direction or the opposite direction. As the head 141 of the screw 140 is held by the screw retaining portion 131, the head 141 does not move. The shaft portion 142 of the screw 140 is in a state of being screwed into the screw hole 106A of the protruding portion 106. Thus, depending on the rotation direction and on a rotation amount of the screw 140, the shaft portion 142 advances into or retracts from the screw hole 106A and thus the main body portion 91 moves in the left-right direction with respect to the upper roller 12. In other words, by using the tool to rotate the screw 140 that is held by the position adjustment tool 130, the user can perform minute adjustment of the position of the main body portion 91 in the width direction of the upper roller 12, easily and with a high degree of accuracy.

A preparatory process of the tape bonding process will be explained with reference to FIG. 3 and FIG. 7. The cloth C1 used in the tape bonding process is, for example, a single cloth formed by joining the ends of two cloths together by thermal bonding. In the tape bonding process, the bonding device 1 can strengthen the joined section of the cloth C1 by adhering the tape C2 to the joined section of the cloth C1 using the adhesive.

As shown in FIG. 3 and FIG. 7, the user pulls out the leading end of the cloth C 1, passes the cloth C1 under the nozzle 10 from the front side of the bonding device 1, and pulls it as far as the pressure bonding point between the upper roller 12 and the lower roller 18. The user pulls out the tape C2 from a tape supply source that is installed to the rear of the bonding device 1, and pulls it forward as far as the tape guide 90 fixed to the left side face 6A of the upper feed arm 6. The user inserts the tape C2 from the tape entrance 101 of the main body portion 91, disposes it along the top face of the guide plate 95, and pulls it out from the tape exit 102. One end in the width direction of the tape C2 disposed on the top face of the guide plate 95 is in contact with an inner face of the right side wall 97 of the main body portion 91. The user loosens the screw 156, and moves the contact portion 121 of the adjustment portion 93 to come into contact with the other end in the width direction of the tape C2 disposed on the top face of the guide plate 95. The contact portion 121 can move in the left-right direction within the range in the long diameter direction of the long hole 122. While the contact portion 121 is in contact with the other end of the tape C2, the user tightens the screw 156 and determines the position of the tape C2. The tape guide 90 can guide the tape C2 that moves along the top face of the guide plate 95 with respect to the outer circumferential face of the upper roller 12 without any displacement in the left-right direction.

The tape C2 that is pulled out from the tape exit 102 is pulled out along the outer circumferential face of the upper roller 12 as far as the pressure bonding point between the upper roller 12 and the lower roller 18. The user adjusts the position of the tape C2 in the width direction of the upper roller 12 such that the tape C2 overlays the joined section of the cloth C1. The position adjustment of the tape C2 is performed by adjusting the position of the main body portion 91 of the tape guide 90 using the above-described method.

Operations of the bonding device 1 in the tape bonding process will be explained with reference to FIG. 3 and FIG. 7. In a state in which the preparatory process is complete, a state is obtained in which the tape C2 overlays the joined section of the cloth C1 at the pressure bonding point between the upper roller 12 and the lower roller 18. The bonding device 1 operates the upper feed motor 22 and the lower feed motor 38 in synchronization. The upper roller drive mechanism 15 rotates the upper roller 12 clockwise, as seen from the left side. The lower roller drive mechanism rotates the lower roller 18 counterclockwise, as seen from the left side. The cloth C1 moves along the feed path R1. The tape C2 is moved along the feed path R2. The bonding device 1 operates the pump motor 20 while operating the upper feed motor 22 and the lower feed motor 38. When the pump motor 20 operates, the gear pump 13 operates, drawing an appropriate amount of the adhesive out of the cartridge that is mounted in the cartridge mounting portion 14 and supplying the adhesive to the supply channel in the interior of the lever 9.

From the supply channel, the adhesive flows through the first flow channel 61 (refer to FIG. 8) in the interior of the nozzle 10, via the flow channel 82A (refer to FIG. 9) of the bush 82. The adhesive flows in order through the first flow channel 61 to the fourth flow channel 64 (refer to FIG. 8), and is discharged from the plurality of discharge outlets 65 provided in the back face 53B of the discharge portion 53. The plurality of discharge outlets 65 face the outer circumferential face of the upper roller 12 at a position further to the upstream side, on the feed path R2 of the tape C2, than the pressure bonding point between the upper roller 12 and the lower roller 18. As a result, the bonding device 1 is able to apply the adhesive to a bonding face of the tape C2 that is being fed along the outer circumferential face of the upper roller 12, and is able to overlay the bonding face onto the joined section of the cloth C1 and perform the bonding at the pressure bonding point. In other words, the bonding device 1 can apply the adhesive to the bonding face of the tape C2 without applying the adhesive to the joined section of the cloth C1. Therefore, the adhesive does not ooze out when adhering the tape C2 to the cloth C1, and the bonding device 1 can suppress bonding defects of the tape C2 with respect to the joined section. The bonding device 1 overlays the bonding face of the tape C2, to which the adhesive has been applied, onto the joined section of the cloth C1while feeding the cloth C 1 and the tape C2 toward the rear.

As shown in FIG. 7, the front face 53C of the discharge portion 53 of the nozzle 10 has a tapered shape in which it is inclined downward from its upper end toward the downstream side of the feed path R1 of the cloth C1. Thus, during the tape bonding process, when seen from the side of the user who is positioned to the front of the bonding device 1, it is easy to see the pressuring bonding point between the upper roller 12 and the lower roller 18. Therefore, when the user performs operations while verifying the position of the cloth C1 and the tape C2 at the pressure bonding point, it is possible to perform position adjustment as appropriate, and therefore possible to reduce bonding defects of the tape C2 with respect to the cloth C1.

In the nozzle 10 of the present embodiment, the support portion 52 is provided standing from the right end of the discharge portion 53, and the nozzle 10 is provided with the coupling structure in which the rotating coupling portion 51 couples the upper end of the support portion 52 to the coupling receiving portion 80 of the lever 9. As a result, an operation area can be secured below the lower end of the lever 9, and the user can thus hold the cloth C1 and the tape C2 close to the nozzle 10. The cloth C1 and the tape C2 can therefore be easily routed.

Operational effects of the tape guide 90 in the tape bonding process will be explained with reference to FIG. 13. In the tape guide 90, the tape C2 is in contact with the top face of the guide plate 95, and enters into the interior of the cover portion 96 from the tape entrance 101. The end 95A of the guide plate 95 curves downward. Thus, the tape guide 90 can reliably guide the tape C2 along the top face of the guide plate 95 without the tape C2 becoming caught up on the end 95A of the guide plate 95. The tape C2 moves along the top face of the guide plate 95. On the top face of the guide plate 95, both ends of the tape C2 in the width direction come into contact, respectively, with the inner side face of the right side wall 97 and the contact portion 121 of the adjustment portion 93. Thus, the position of the tape C2 on the guide plate 95 is not displaced in the left-right direction. As a result, the tape guide 90 can reliably guide the tape C2 that moves along the top face of the guide plate 95, without any displacement of the tape C2 in the width direction with respect to the upper roller 12. At the tape exit 102, the end 95B of the guide plate 95 curves along the outer circumferential face of the upper roller 12. Thus, the tape guide 90 can smoothly guide the tape C2 that passes through the tape exit 102 along the outer circumferential face of the upper roller 12. Via the window portion 107 of the cover potion 96 of the tape guide 90, the user can verify the position of the tape C2 that moves along the top face of the guide plate 95.

Since the tape guide 90 of the present embodiment is fixed to the left side face 6A of the upper feed arm 6 such that the bottom face side of the guide plate 95 faces the front side upper portion of the outer circumferential face of the upper roller 12, the tape guide 90 can be provided in a position close to the nozzle 10. Therefore, the bonding device 1 can suppress variations in an application position of the adhesive on the tape C2. The bonding device 1 fixes the tape guide 90 to the left side face 6A of the upper feed arm 6, and can thus route the tape C2 from the rear of the bonding device 1 and supply the tape C2 to the upper roller 12. It is not necessary to route the tape C2 from above the bonding device 1, and thus, when replacing the cartridge in the cartridge mounting portion 14, for example, the user's hand does not come into contact with the tape C2 and does not displace the tape C2. It is therefore possible to inhibit bonding defects of the tape C2.

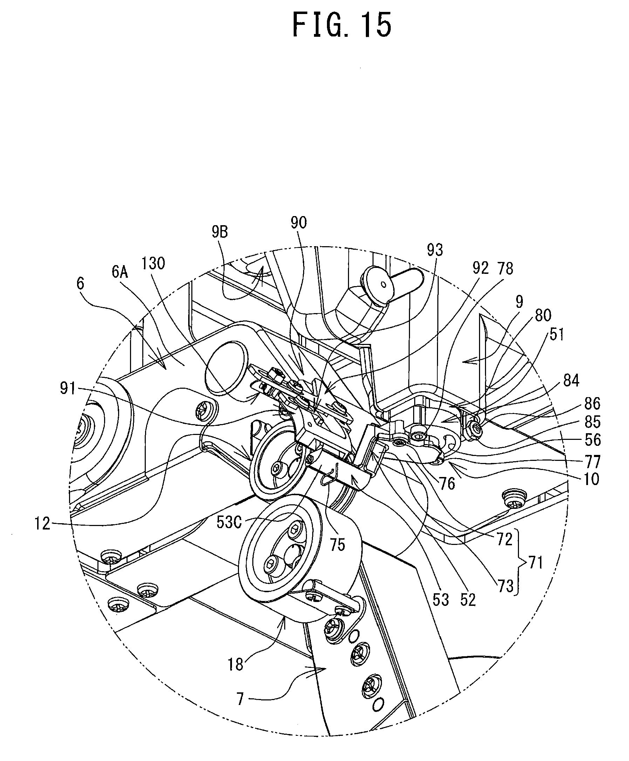

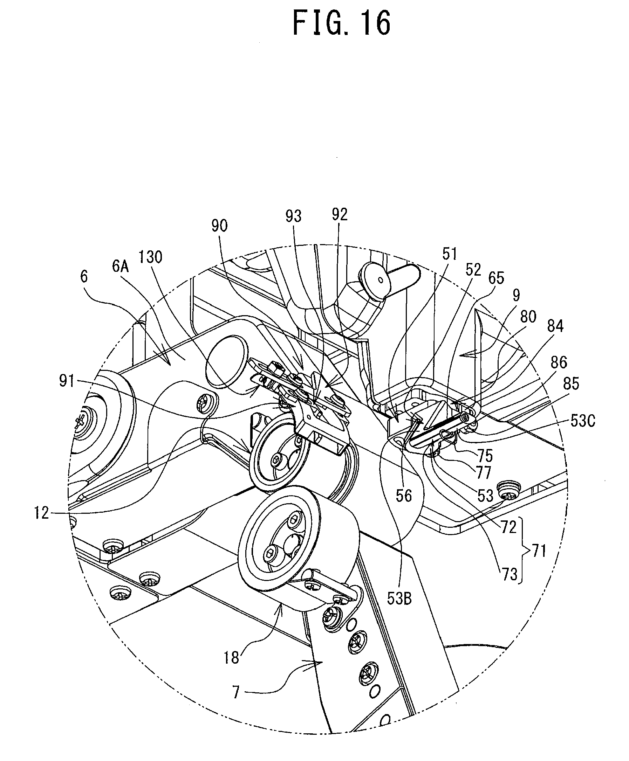

A method of rotationally operating the nozzle 10 when cleaning the discharge outlets 65 will be explained with reference to FIG. 15 and FIG. 16. As shown in FIG. 15, when cleaning the discharge outlets 65 of the nozzle 10, for example, when the nozzle 10 is in the first position, the discharge outlets 65 are facing toward the outer circumferential face of the upper roller 12 and the cleaning of the discharge outlets 65 is not possible. The user therefore removes, with a tool, the screw 78 fastened into the fixing hole 57 (refer to FIG. 9) of the rotating coupling portion 51 of the nozzle 10, and loosens the screw 77 that has been fixed via the guide hole 56. The rotating coupling portion 51 can rotate around the bush 82 (refer to FIG. 9). As shown in FIG. 16, the user grips the discharge portion 53 of the nozzle 10 that is in the first position, and rotates the discharge portion 53 by approximately 90 degrees in a direction to separate the discharge outlets 65 from the upper roller 12. When the rotating coupling portion 51 rotates, the screw 77 follows the inside of the guide hole 56. The rotating coupling portion 51 rotates around the bush 82, and the nozzle 10 moves to a second position. In the nozzle 10 that is in the second position, the back face 53B of the discharge portion 53 is facing leftward, and the plurality of discharge outlets 65 can be easily seen from the user side. Thus, the user can easily perform the cleaning of the discharge outlets 65. In the bonding device 1, it is not necessary to significantly swing the lever 9 to the retracted position, and the user can thus safely clean the discharge outlets 65.

After the cleaning of the discharge outlets 65 is complete, the user moves the nozzle 10 from the second position to the first position. The locking portion 58 that rotates together with the rotating coupling portion 51 is locked by the rear end of the bolt 86. The position of the nozzle 10 when the locking portion 58 is locked by the rear end of the bolt 86 is the first position. The locking of the bolt 86 with the locking portion 58 inhibits the rotation of the nozzle 10 in a direction in which the discharge outlets 65 approach more closely to the outer circumferential face of the upper roller 12 than when in the first position. Thus, the bonding device 1 can accurately position the nozzle 10 in the first position. As a result, it is possible to maintain a constant clearance between the outer circumferential face of the upper roller 12 and the discharge outlets 65 of the discharge portion 53. It is possible to suppress bonding defects of the tape C2 with respect to the cloth C 1. The user can accurately and easily move the nozzle 10 to the first position.

The position of the bolt 86 can be adjusted, on the rotational locus of the locking portion 58 that rotates together with the rotating coupling portion 51, by adjusting the amount of tightening of the bolt 86 with respect to the support nut 84 and the nut 85. As a result, when the locking portion 58 is locked by the rear end of the bolt 86, for example, the bonding device 1 can minutely adjust the first position of the nozzle 10 such that the bonding face of the tape C2 and the discharge outlets 65 of the nozzle 10 are parallel to each other. In this way, the bonding device 1 can make uniform an amount of the adhesive that adheres to the bonding face of the tape C2 in the width direction of the discharge outlets 65.

The tape C2 is equivalent to a first sheet of the present invention, and the cloth C1 is equivalent to a second sheet of the present invention. The upper feed arm 6 is equivalent to an upper roller support member of the present invention. The tape guide 90 is equivalent to a guide member of the present invention. The main body portion 91 is equivalent to a main body portion of the present invention, the fixing portion 92 is equivalent to a fixing portion of the present invention, and the adjustment portion 93 is equivalent to a second contact portion of the present invention. The right side wall 97 of the main body portion 91 is equivalent to a first contact portion of the present invention. The long holes 114 and 115 of the support portion 112, and the screws 151 and 152 are equivalent to a change mechanism of the present invention. The position adjustment tool 130 is equivalent to a screw holding member of the present invention.

As described above, the bonding device 1 of the present embodiment can perform the tape bonding process that bonds the tape C2 onto the cloth C1 with the adhesive. The bonding device 1 includes the nozzle 10, the upper roller 12, the lower roller 18 and so on. The nozzle 10 includes the discharge outlets 65 that discharge the adhesive. The upper roller 12 comes into contact with the face of the tape C2 that is opposite to the bonding face. The lower roller 18 is positioned below the cloth C1 and the tape C2. The lower roller 18 faces the upper roller 12. The lower roller 18 comes into contact with the bottom face of the cloth C1. The upper roller 12 and the lower roller 18 clamp the cloth C1 and the tape C2. The upper roller 12 and the lower roller 18 feed the cloth C1 and the tape C2 with the bonding face of the tape C2 overlaying the top face of the cloth C1.

The discharge outlets 65 of the nozzle 10 face the outer circumferential face of the upper roller 12 at a position further upstream side in the feed direction of the tape C2 than the pressure bonding point. The bonding device 1 applies the adhesive to the bonding face of the tape C2 while feeding the tape C2. The tape guide 90 is fixed to the left side face 6A of the upper feed arm 6. The tape guide 90 faces the outer circumferential face of the upper roller 12, and guides the tape C2 to the outer circumferential face of the upper roller 12. The tape guide 90 is fixed to the left side face 6A of the upper feed arm 6 such that it faces the outer circumferential face of the upper roller 12, and thus, in the bonding device 1, the tape guide 90 can be installed in the vicinity of the nozzle 10. As a result, the bonding device 1 can suppress variations in the position of the tape C2 with respect to an application position of the adhesive, and can thus inhibit a bonding defect of the tape C2 with respect to the cloth C1. The tape guide 90 is fixed to the left side face 6A of the upper feed arm 6, and it is thus not necessary to route the tape C2 from the upper portion of the bonding device 1 to the upper roller 12. As a result, when replacing the cartridge mounted in the cartridge mounting portion 14, for example, it is possible to inhibit the arm of the user from coming into contact with the tape C2.

The tape guide 90 is provided with the main body portion 91. The main body portion 91 is provided with the guide plate 95. The guide plate 95 extends in parallel with the width direction of the outer circumferential face of the upper roller 12. The end 95B of the guide plate 95 on the downstream side in the feed direction of the tape C2 curves along the outer circumferential face of the upper roller 12. Therefore, the tape guide 90 can reliably and smoothly guide the tape C2 along the outer circumferential face of the upper roller 12.

The end 95A of the guide plate 95 on the upstream side in the feed direction of the tape C2 curves to the opposite side from the face that guides the tape C2. Therefore, when feeding the tape C2, the tape guide 90 can reliably guide the tape C2 to the outer circumferential face of the upper roller 12 without the tape C2 becoming caught up on the guide plate 95.

The tape guide 90 faces the outer circumferential face of the upper roller 12 at a position further to the upstream side, in the feed direction of the tape C2, than the pressure bonding point at which the upper roller 12 and the lower roller 18 pressure bond the tape C2 and the cloth C1, and at a position higher than the nozzle 10. The bonding device 1 can thus dispose the tape guide 90 at a position closer to the nozzle 10, and can reliably guide the tape C2 along the tape guide 90 to the outer circumferential face of the upper roller 12.

The main body portion 91 is provided with the right side wall 97, and the one end in the width direction of the tape C2 that is moving on the top face of the guide plate 95 is in contact with the right side wall 97. The main body portion 91 is further provided with the adjustment portion 93. The adjustment portion 93 is provided such that it can move in the left-right direction that is parallel to the width direction of the upper roller 12, and can come into contact with the other end in the width direction of the tape C2 that is moving on the top face of the guide plate 95. As a result, the tape guide 90 can guide the tape C2 that is moving along the top face of the guide plate 95 to the outer circumferential face of the upper roller 12, without any displacement of the tape C2 in the left-right direction.

The tape guide 90 is provided with the fixing portion 92. The fixing portion 92 fixes the main body portion 91 to the left side face 6A of the upper feed arm 6. The fixing portion 92 is provided with the support portion 112. The support portion 112 extends in the left-right direction, and is provided with the long holes 114 and 115. The long holes 114 and 115 extend in the extending direction of the support portion 112. The main body portion 91 is fixed by the screws 151 and 152, via the long holes 114 and 115. By loosening the screws 151 and 152, the main body portion 91 can move along the long holes 114 and 115 with respect to the support portion 112. As a result, the tape guide 90 can change the position of the main body portion 91 in accordance with a bonding position of the tape C2, and can thus guide the tape C2 to the appropriate position with respect to the outer circumferential face of the upper roller 12.

The fixing portion 92 is provided with the position adjustment tool 130, in a position corresponding to the long hole 115 of the support portion 112. When the shaft portion 142 of the screw 140 is oriented in the left-right direction, the position adjustment tool 130 rotatably supports the head 141 of the screw 140. The left side wall 98 of the main body portion 91 is provided with the protruding portion 106 that protrudes to the left from the left side face. The left side face of the protruding portion 106 faces the shaft portion 142 of the screw 140 held by the position adjustment tool 130. The screw hole 106A is provided in the left side face of the protruding portion 106. The screw hole 106A extends along an axial line of the shaft portion 142, and the shaft portion 142 is screwed into the screw hole 106A. Thus, when the head 141 of the screw 140 is rotated using a tool, the shaft portion 142 advances into or retracts from the screw hole 106A, and the position of the main body portion 91 in the left-right direction can be minutely adjusted.

The present invention is not limited to the above-described embodiment and the following various modifications are possible, for example. The bonding device 1 of the above-described embodiment can bond a flexible sheet-like material, which is not limited to the cloth.

In the above-described embodiment, when the tape bonding process is performed, the nozzle 10 is mounted on the lower end of the lever 9 and the plurality of discharge outlets 65 of the nozzle 10 are disposed facing the outer circumferential face of the upper roller 12. The bonding device 1 may mount another nozzle on the lower end of the lever 9, for example, and may cause discharge outlets of the nozzle to face the outer circumferential face of the lower roller 18. In this case, the nozzle applies the adhesive to the lower cloth.

The position adjustment tool 130 of the above-described embodiment is provided with the four leg portions 134 to 137, but the number of leg portions may be more than four or may be less than four. As long as a shape is adopted in which the head 141 of the screw 140 can be rotatably held, it is acceptable for the leg portions not to be provided. For example, the shape of the bowl portion 133 may be changed and a groove into which the head 141 can be inserted may be formed inside the bowl portion 133.

The adjustment portion 93 and the position adjustment tool 130 may be omitted from the tape guide 90 of the above-described embodiment. It is acceptable for the ends 95A and 95B of the guide plate 95 not to be curved and to be formed in a straight line. It is acceptable for the support portion 112 of the fixing portion 92 not to be provided with the long holes 114 and 115, and the position of the main body portion 91 in the width direction of the upper roller 12 may be fixed.

In the above-described embodiment, the tape guide 90 faces the outer circumferential face of the upper roller 12 at a position further to the upstream side, in the feed direction of the tape C2, than the pressure bonding point at which the upper roller 12 performs the pressure bonding in coordination with the lower roller 18, and at a position higher than the nozzle 10. It is acceptable if the tape guide 90 is disposed to be at least facing the outer circumferential face of the upper roller 12.

In the nozzle 10 of the above-described embodiment, the discharge portion 53 is provided with the indicator member 75, but the shape of the indicator member 75 is not limited to the substantial L shape. The indicator member 75 need not necessarily be formed of wire, and may be a plate member that is formed in a substantial L shape, and a portion thereof that extends upward may be fixed by being inserted into the through holes 533 and 534 from the lower side of the discharge portion 53. The indicator member 75 may be fixed to the discharge portion 53 by screws. In place of the indicator member 75, a groove or a hole etc. that functions as a marker may be machined in the top face 53A corresponding to the intermediate position of the plurality of discharge outlets 65, or a mark may be printed, or a seal may be adhered etc. The marking grooves 531 and 532 may similarly be changed. The indicator member 75 and the marking grooves 531 and 532 may be omitted.

In the nozzle 10 of the above-described embodiment, the whole face of the front face 53C of the discharge portion 53 has the tapered shape in which it is inclined downward, but it is sufficient if at least the upper portion of the front face 53C has the tapered shape. The shape of the nozzle 10 is not limited to the above-described embodiment, and the rotating coupling portion 51 may be omitted, for example, and the support portion 52 may be capable of being coupled to the lower end of the lever 9.

In the above-described embodiment, the lever 9 swings around the pivotal shaft 9A, and movably supports the nozzle 10. A movement mechanism of the nozzle 10 may be provided with a support member that supports the nozzle 10, for example. At this time, the support member may be capable of moving in parallel with and along the feed path R1.

The orientation in which the upper roller 12 and the lower roller 18 face each other is not limited to the up-down direction, and the upper roller 12 and the lower roller 18 may face each other in a diagonal direction.

The outer diameter of the lower roller 18 is larger than the outer diameter of the upper roller 12. The outer diameters of both the rollers 12 and 18 may be the same. The outer diameter of the lower roller 18 may be smaller than the outer diameter of the upper roller 12.

The lower portion of the lower feed arm 7 extends diagonally upward and to the rear. The lower feed arm 7 may extend in the vertical direction.

## Claims

1. A bonding device (1) comprising:
a nozzle (10) adapted to discharge an adhesive; and
a feed mechanism adapted to overlay a bonding face of a first sheet onto a top face of a second sheet and adapted to feed the first sheet and the second sheet, the adhesive discharged from the nozzle being interposed between the first sheet and the second sheet,
wherein
the nozzle is provided further to an upstream side in a feed direction of the first sheet than a position at which the first sheet overlays the second sheet,
the feed mechanism includes
an upper roller (12) adapted to be disposed above the first sheet and the second sheet at the position at which the first sheet overlays the second sheet, having a width greater than a width of the first sheet, and adapted to come into contact with a face of the first sheet that is opposite to the bonding face, the width of the first sheet being orthogonal to a feed direction of the first sheet,
a lower roller (18) facing the upper roller, adapted to come into contact with a bottom face of the second sheet, and adapted to pressure-bond the first sheet and the second sheet between the lower roller and the upper roller,
an upper roller support member (6) rotatably supporting the upper roller, and,
a guide member (90) provided on the upper roller support member, facing an outer circumferential face of the upper roller at a position further to the upstream side in the feed direction of the first sheet than the position at which the first sheet overlays the second sheet, and adapted to guide the first sheet to the outer circumferential face of the upper roller, and
the guide member includes
a main body portion (91) extending in parallel to a width direction of the outer circumferential face of the upper roller, and curving along the outer circumferential face on a downstream side in the feed direction of the first sheet, and
a fixing portion (92) fixing the main body portion to the upper roller support member.

2. The bonding device according to claim 1, wherein
an end (95A) of the main body portion on the upstream side, in the feed direction of the first sheet, curves to a side opposite to a face that guides the first sheet.

3. The bonding device according to claim 1 or 2, wherein
the main body portion includes
a first contact portion (97) adapted to come into contact with one end in a width direction of the first sheet, and
a second contact portion (93) provided on the main body portion so as to be capable of moving in a first direction parallel to the width direction of the upper roller, and capable of coming into contact with another end on a side opposite to the one end of the first sheet.

4. The bonding device according to any one of claims 1 to 3, wherein
the fixing portion includes a change mechanism (114, 115, 151, 152) supporting the main body portion such that the main body portion is able to move in the first direction, and adapted to change a position of the main body portion in the first direction.

5. The bonding device according to any one of claims 1 to 4, wherein
the main body portion includes
a screw holding member (130) rotatably holding a head (141) of a screw (140) in a state in which a shaft portion (142) of the screw is oriented in the first direction, and
a screw hole (106A) provided on one end side in the first direction of the main body portion in a side face facing the screw held by the screw holding member, extending along an axial line of the shaft portion, and being screwably engaged with the shaft portion.
